# EUROPEAN PATENT APPLICATION

(11) **EP 2 030 820 A1**
(43) Date of publication of application: **04.03.2009**
(21) Application number: 07767050.3
(22) Date of filing: 05.06.2007
(51) Int. Cl.: B60H 3/02, F24F 11/02

(54) **HUMIDITY CONTROL DEVICE AND HUMIDITY CONTROL METHOD**

(30) Priority: 06.06.2006 JP 2006157654
(71) Applicant: Toyota Jidosha Kabushiki Kaisha, Toyota-shi, Aichi 471-8571 (JP)
(72) Inventor: NAKAGURO, Takanobu, Toyota-shi, Aichi 471-8571 (JP)
(74) Representative: Kuhnen & Wacker
(86) International application number: PCT/JP2007/061389
(87) International publication number: WO 2007/142242

(57) **Abstract**

A humidity control device (10) provided on a vehicle has a humidifier (12) capable of humidifying the vehicle interior and also has a control unit for controlling operation of the humidifier (12) so that the humidity in the interior is maintained at a predetermined target value. In the humidity control device (10), operating each operation switch of an operation panel (14) causes the humidifier (12) to be controlled so as to achieve an aimed item predetermined corresponding to the operation switch, and as a result, the humidity in the vehicle interior (32) is maintained within an optimum range which an occupant (P) in the interior feels comfortable. Also, moisture (St) is locally jetted from the humidifier (12) to the head (entire face, more specifically) of the occupant (P). By doing so, the moisture (St) is prevented from dispersing in the vehicle interior (32).

## Description

### Technical Field

The present invention relates to a humidity control device and a humidity control method and, in particular, relates to a humidity control device and a humidity control method capable of humidifying a vehicle interior.

### Background Art

As this type of humidity control device, there is the following (for example, refer to patent document- 1). For example, patent document 1 discloses an example of an air conditioning device for sending air to the vehicle interior. This air conditioning device is provided with a humidifier that humidifies air flowing at a downstream side of a heater core of a fan duct and is configured so that the vehicle interior can be humidified by this humidifier.
Patent Document 1: Japanese Patent Application Laid-Open (JP-A) No. 6-64442

### Disclosure of the Invention

### Problem to be Solved by the Invention

However, in the example described in patent document 1, it is only possible to cause the humidifier to turn on and off per a predetermined time period (fixed time period) in order to provide a sense of fluctuation with respect to an occupant, and there is room for improvement in order to further increase comfort in the vehicle interior.

The present invention has been achieved in consideration of the above circumstances, and it is an object thereof to provide a humidity control device that is capable of further increasing comfort in a vehicle interior.

### Means for Solving the Problem

In order to solve the above-described problem, a humidity control device of a first aspect of the present invention comprises a humidification unit that is capable of humidifying a vehicle interior, and a control unit that controls operation of the humidification unit so that a humidity of the vehicle interior is maintained at a predetermined target value.

It should be noted that the humidity in this case may be either one of an absolute humidity or a relative humidity.

In the humidity control device of the above aspect of the present invention, by controlling operation of the humidification unit by the control unit, the humidity of the vehicle interior is maintained at the predetermined target value. Accordingly, if this target value is set within an optimum humidity range which feels comfortable for an occupant in the vehicle interior, it becomes possible to further increase the comfort of the vehicle interior.

In the humidity control device of the above first aspect of the present invention, the humidification unit may be configured to be capable of locally humidifying a specific region of the occupant in the vehicle interior.

If the humidification unit is configured to be capable of locally humidifying a specific region of the occupant in the vehicle interior, dispersing of moisture from the humidification unit in the vehicle interior can be suppressed. As a result, for example, it becomes possible to prevent fogging of a window provided in the vehicle interior.

In the humidity control device of the above first aspect of the present invention, a configuration may be provided in which the humidification unit is configured so that it is possible to adjust at least one of a humidification amount and a humidification interval with respect to the vehicle interior, and the control unit adjusts at least one of the humidification amount and the humidification interval of the humidification unit so that the humidity of the vehicle interior is maintained at the predetermined target value.

In the humidity control device of the above configuration of the present invention, by configuring the humidification unit so that it is possible to adjust at least one of the humidification amount or the humidification interval with respect to the vehicle interior and adjusting at least one of the humidification amount or the humidification interval of the humidification unit by the control unit, the humidity of the vehicle interior is maintained at the predetermined target value. In this manner, according to the humidity control device of the above configuration, by adjusting at least one of the humidification amount or the humidification interval of the humidification unit, it becomes possible to reliably maintain the humidity of the vehicle interior at the predetermined target value.

In the humidity control device of the above first aspect of the present invention, a configuration may be provided in which the humidification unit is configured so that it is possible to adjust a humidification speed with respect to a humidification object, and the control unit adjusts the humidification speed of the humidification unit in accordance with a distance between the humidification unit and the humidification object.

In the humidity control device of the above configuration, the humidification unit is configured so that it is possible to adjust the humidification speed with respect to the humidification object, and the humidification speed of the humidification unit is adjusted in accordance with the distance between the humidification unit and the humidification object. At this time, for example, if the humidification speed of the humidification unit is set so as to become faster in accordance with the distance between the humidification unit and the humidification object increasing, even if the distance between the humidification unit and the humidification object increases, it becomes possible to send the moisture from the humidification unit even further and reliably cause it to reach the humidification object. Moreover, dispersing of the moisture from the humidification unit can also be suppressed, and it becomes possible to even more reliably prevent fogging of the window in the vehicle interior.

In the humidity control device of the above first aspect of the present invention, a configuration may be provided in which the humidification unit is configured so that it is possible to adjust the humidification amount with respect to the humidification object, and the control unit adjusts the humidification amount of the humidification unit in accordance with the distance between the humidification unit and the humidification object.

In the humidity control device of the above configuration, the humidification unit is configured so that it is possible to adjust the humidification amount with respect to the humidification object, and the humidification amount of the humidification unit is adjusted in accordance with the distance between the humidification unit and the humidification object. At this time, for example, if the humidification amount of the humidification unit is set so as to increase in accordance with the distance between the humidification unit and the humidification object increasing, even if the distance between the humidification unit and the humidification object increases, it becomes possible to maintain an amount of moisture that reaches the humidification object from the humidification unit. As a result, it becomes possible to reliably supply the moisture with respect to the occupant.

In the humidity control device of the above first aspect of the present invention, the control unit may store a plurality of the target values and control operation of the humidification unit so that the humidity of the vehicle interior is maintained at each of the plurality of the target values. In other words, a configuration may be provided in which the plurality of the target values can be selected, and when any of the plurality of the target values is selected, the control unit controls operation of the humidification unit so that the humidity of the vehicle interior is maintained at the one selected from the plurality of the target values.

In the humidity control device of the above configuration, the plurality of the target values are predetermined and stored in the control unit, and the control unit controls operation of the humidification unit so that the humidity of the vehicle interior is maintained at each of the plurality of the target values in accordance with the selection. In this manner, according to the humidity control device of the above configuration, the humidity of the vehicle interior can be maintained at the plurality of the target values.

Further, at this time, in a case where, for example, prevention of drying of the skin of the occupant in the vehicle interior, prevention of drying of the eyes of the occupant in the vehicle interior, prevention of dispersal of allergens in the vehicle interior, prevention of dispersal of viruses in the vehicle interior, prevention of dispersal of bacteria in the vehicle interior, and the like are set as aimed items, and the respective target values described above are set to correspond to the respective aimed items so as to achieve each of the respective aimed items, due to the humidity of the vehicle interior being maintained at the respective target values as described above, the aforementioned respective aimed items (for example, prevention of drying of the skin of the occupant in the vehicle interior and the like) can be achieved, and it becomes possible to even further increase the comfort of the vehicle interior.

In the humidity control device of the above first aspect of the present invention, a configuration may be provided in which an operation switch that is capable of selecting each of the plurality of the target values is provided, and the control unit controls operation of the humidification unit so that the humidity of the vehicle interior is maintained at the target value corresponding to the selection state of the operation switch.

In the humidity control device of the above configuration, when the control switch is operated and any of the plurality of the target values is selected, operation of the humidification unit is controlled so that the humidity of the vehicle interior is maintained at the target value selected by the operation switch. In this manner, according to the humidity control device of the above configuration, by selectively operating the control switch, it becomes possible to maintain the humidity of the vehicle interior at the respective target values.
A second aspect of the present invention is a humidity control method for a humidification unit that is disposed at a vehicle interior and comprises determining a target humidity of the vehicle interior according to a humidification pattern that is selected in accordance with a humidification aim, measuring a distance between the humidification unit and an occupant in the vehicle interior, calculating a humidification speed of the humidification unit based on the target humidity and the distance, adjusting a humidification amount per one jetting that is prescribed by the humidification pattern, based on the distance, and operating the humidification unit based on the adjustment result of the humidification amount per one jetting and the humidification speed.

### Effects of the Invention

As described in detail above, according to the present invention, it becomes possible to further increase the comfort of the vehicle interior.

### Brief Description of the Drawings

Fig. 1 is a cross-sectional side view of a vehicle to which a humidity control device according to one exemplary embodiment of the present invention has been applied.
Fig. 2 is a front elevation view of an operation panel of the humidity control device according to one exemplary embodiment of the present invention.
Fig. 3 is an explanatory view showing the content of information that is converted to data and stored in a control unit according to one exemplary embodiment of the present invention.
Fig. 4A is an explanatory view showing the content of information that is converted to data and stored in the control unit according to one exemplary embodiment of the present invention.
Fig. 4B is an explanatory view showing the content of information that is converted to data and stored in the control unit according to one exemplary embodiment of the present invention.
Fig. 5 is an explanatory view showing the relationships between a plurality of aimed items and targets (target values) of an absolute humidity of a vehicle interior according to one exemplary embodiment of the present invention.
Fig. 6 is a flowchart showing the flow of operation of the humidity control device according to one exemplary embodiment of the present invention.
Fig. 7 is an explanatory view showing the relationship between the absolute humidity of the vehicle interior humidified by the humidity control device according to one exemplary embodiment of the present invention, and time.

### Best Mode for Implementing the Invention

First, the configuration of a humidity control device 10 according to one exemplary embodiment of the present invention will be explained.

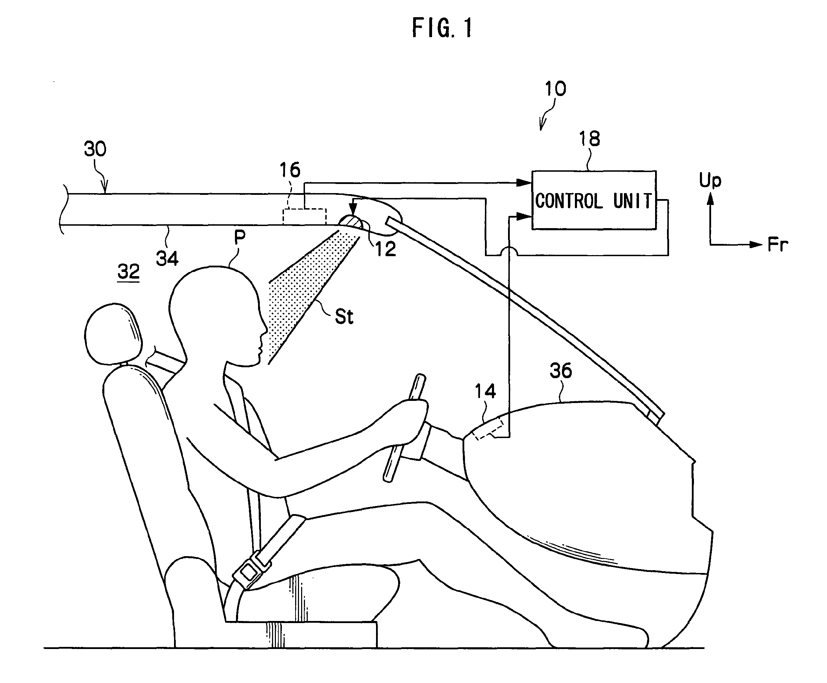

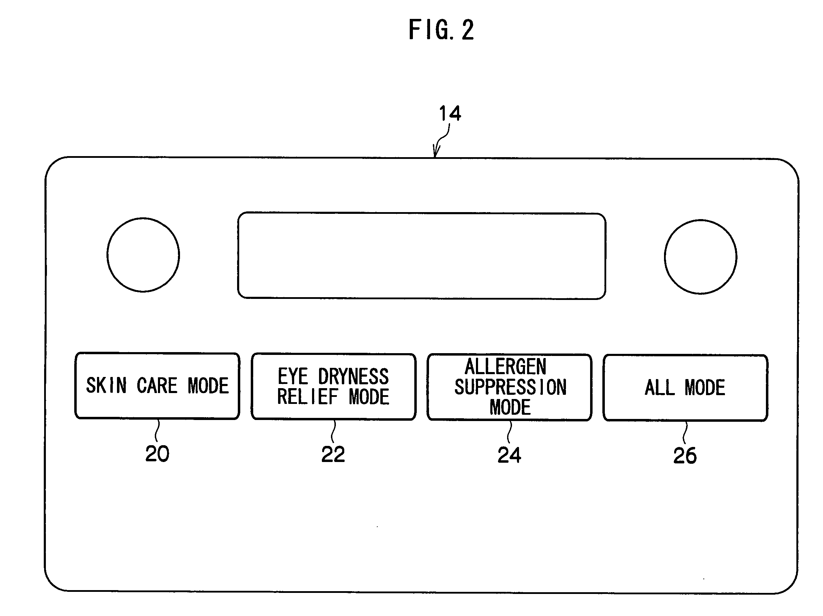

In Fig. 1, a cross-sectional side view of a vehicle 30 to which the humidity control device 10 according to one exemplary embodiment of the present invention has been applied is shown, and in Fig. 2, a front elevation view of an operation panel 14 of the humidity control device 10 according to one exemplary embodiment of the present invention is shown. It should be noted that arrow Fr and arrow Up shown in Fig. 1 respectively indicate a vehicle front-rear direction front side and a vehicle up-down direction upper side.

As shown in Fig. 1, the humidity control device 10 according to one exemplary embodiment of the present invention is, for example, preferably mounted at a vehicle 30 such as a passenger automobile or the like and comprises, as the main configuration thereof, a humidifier 12 serving as a humidification unit (humidification means), an operation panel 14, a distance sensor 16, and a control unit 18 serving as a control means. Below, explanation thereof will be carried out in this order.

The humidifier 12 is provided at a ceiling portion 34 of a vehicle interior 32. The humidifier 12 comprises a nozzle (not shown in the drawings) constituted by a spray or air gun and is configured so that moisture St can be locally jetted from the nozzle mainly to the head (more specifically, the entire face) of an occupant P. Further, at this time, the humidifier 12 is configured so that it is possible to adjust a humidification amount per one jetting by, for example, expanding and contracting an aperture of the nozzle (or by adjusting a rectifying element) and is configured so that it is possible to adjust an interval (humidification interval) of intermittent jetting of the moisture St from the nozzle and a jetting speed (humidification speed) of the moisture St from the nozzle.

The operation panel 14 is integrally disposed, for example, at a vehicle width direction central portion of an instrument panel 36 that is installed at the vehicle 30. As shown in Fig. 2, a skin care mode switch 20, an eye dryness relief mode switch 22, an allergen suppression mode switch 24, and an ALL mode switch 26 are provided at the operation panel 14. Further, the operation panel 14 is configured so as to output an operation signal to the control unit 18, which will be described below, in accordance with the aforementioned respective operation switches being operated by the occupant P.

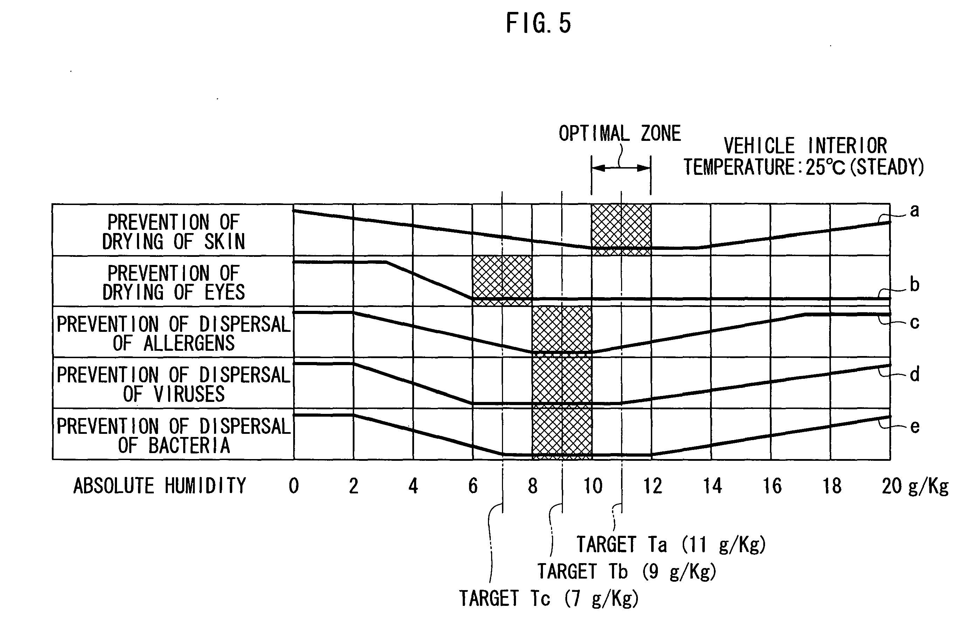

It should be noted that, among this plurality of switches, the skin care mode switch 20 is provided so as to correspond to "prevention of drying of the skin of the occupant in the vehicle interior" which is an aimed item of the present exemplary embodiment which will be described below (refer to Fig. 5), and the eye dryness relief mode switch 22 is provided so as to correspond to "prevention of drying of the eyes of the occupant in the vehicle interior" which is an aimed item of the present exemplary embodiment which will be described below. Further, the allergen suppression mode switch 24 is provided so as to correspond to "prevention of dispersal of allergens in the vehicle interior", "prevention of dispersal of viruses in the vehicle interior", and "prevention of dispersal of bacteria in the vehicle interior" which are aimed items of the present exemplary embodiment which will be described below, and the ALL mode switch 26 is provided for provision of a comfortable space in the vehicle interior.

The distance sensor 16 is provided adjacent to the humidifier 12 at the ceiling portion 34 of the vehicle interior 32. The distance sensor 16 is constituted by, for example, an ultrasonic sensor, a camera or the like. Further, the distance sensor 16 is configured so as to measure a distance to the head of the occupant P in the vehicle interior and output a measurement signal corresponding to this measurement result to the control unit 18 which will be described below.

The control unit 18 is constituted by electronic circuits provided with, for example, a CPU, a ROM, a RAM and the like, and is disposed at an appropriate position at the vehicle 30, such as at the interior of the instrument panel 36 or the like. The control unit 18 is configured to adjust operation of the humidifier 12, that is, the humidification amount per one jetting, the interval of intermittent jetting of the moisture St, and the jetting speed of the moisture St, as described in detail below, based on the operation signal from the operation panel 14 and the measurement signal from the distance sensor 16 which are described above.

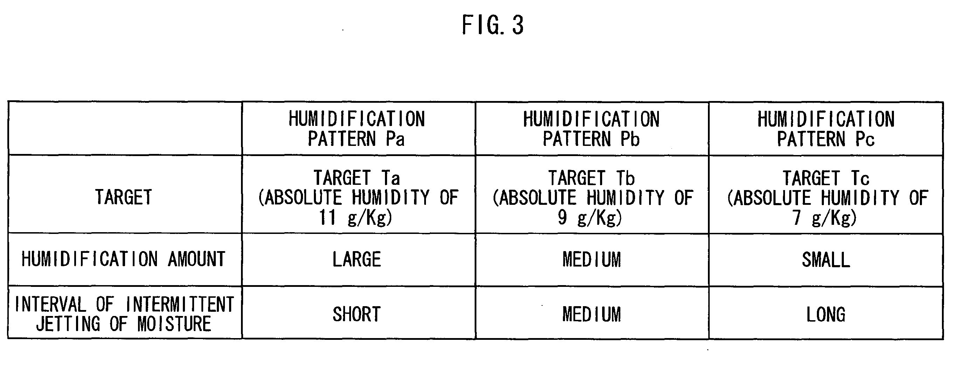

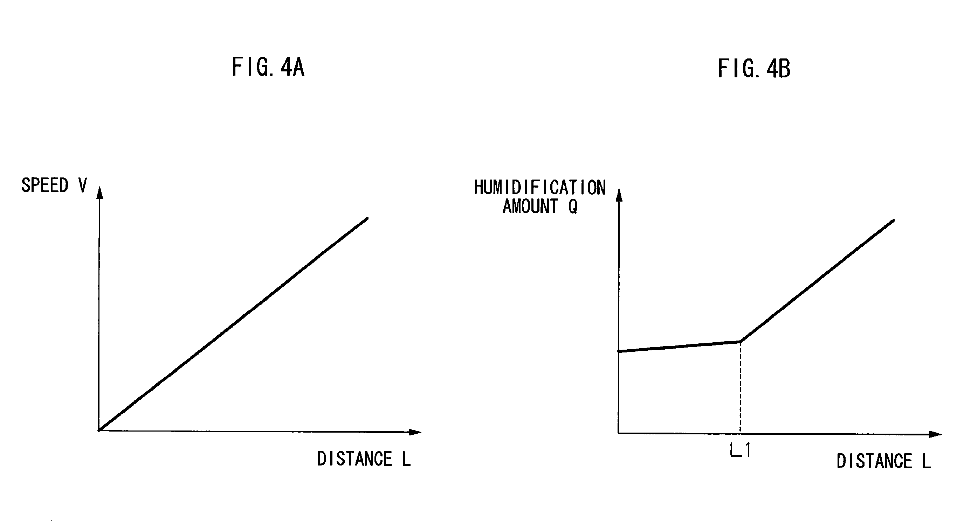

Further, in order to adjust the humidification amount per one jetting of the humidifier 12, the interval of intermittent jetting of the moisture St and the jetting speed of the moisture St based on the operation signal from the operation panel 14 and the measurement signal from the distance sensor 16 which are described above, for example, information such as follows is converted to data and stored in advance at the control unit 18. In Fig. 3, Fig. 4A and Fig. 4B, explanatory views showing the content of information that is converted to data and stored at the control unit 18 are shown, and in Fig. 5, the relationships between a plurality of aimed items and targets (target values) of the absolute humidity of the vehicle interior are shown.

First, before explaining the specific content of the information that is converted to data and stored at the control unit 18, the relationships between the plurality of aimed items and the targets (target values) of the absolute humidity of the vehicle interior shown in the map in Fig. 5 will be explained. As shown in this map, in the present exemplary embodiment, "prevention of drying of the skin of the occupant in the vehicle interior", "prevention of drying of the eyes of the occupant in the vehicle interior", "prevention of dispersal of allergens in the vehicle interior", "prevention of dispersal of viruses in the vehicle interior", and "prevention of dispersal of bacteria in the vehicle interior" are set as the plurality of aimed items.

Meanwhile, the target (target value) of the absolute humidity of the vehicle interior for carrying out "prevention of drying of the skin of the occupant in the vehicle interior" is set at an absolute humidity of 11 g/Kg, the target (target value) of the absolute humidity of the vehicle interior for carrying out "prevention of drying of the eyes of the occupant in the vehicle interior" is set at an absolute humidity of 7 g/Kg, and the target (target value) of the absolute humidity of the vehicle interior for carrying out "prevention of dispersal of allergens in the vehicle interior", "prevention of dispersal of viruses in the vehicle interior", and "prevention of dispersal of bacteria in the vehicle interior" is set at an absolute humidity of 9 g/Kg.

In other words, as shown in the line graph a in Fig. 5, at an absolute humidity of the vehicle interior 32 of 0 to 10 g/Kg, the effect of prevention of drying of the skin of the occupant P in the vehicle interior is low, and conversely, at an absolute humidity of the vehicle interior 32 of 12 to 20 g/Kg, for example, the occupant P feels uncomfortable, and fogging of the window in the vehicle interior 32 occurs.

On the other hand, in order to prevent drying of the skin of the occupant P in the vehicle interior, it is optimal that the absolute humidity of the vehicle interior 32 is 10 to 12 g/Kg. Thus, in the present exemplary embodiment, a target Ta (target value) of the absolute humidity of the vehicle interior 32 for carrying out "prevention of drying of the skin of the occupant in the vehicle interior" is set at an absolute humidity of 11 g/Kg, which is the center value of the absolute humidity of the vehicle interior 32 of 10 to 12 g/Kg.

Further, as shown in the line graph b in Fig. 5, at an absolute humidity of the vehicle interior 32 of 0 to 6 g/Kg, the effect of prevention of drying of the eyes of the occupant P in the vehicle interior is low, and conversely, at an absolute humidity of the vehicle interior 32 of 8 to 20 g/Kg, for example, the occupant P feels uncomfortable, and fogging of the window in the vehicle interior 32 occurs.

On the other hand, in order to prevent drying of the eyes of the occupant P in the vehicle interior, it is optimal that the absolute humidity of the vehicle interior 32 is 6 to 8 g/Kg. Thus, in the present exemplary embodiment, a target Tc (target value) of the absolute humidity of the vehicle interior 32 for carrying out "prevention of drying of the eyes of the occupant in the vehicle interior" is set at an absolute humidity of 7 g/Kg, which is the center value of the absolute humidity of the vehicle interior 32 of 6 to 8 g/Kg.

Moreover, as shown in the line graphs c, d and e in Fig. 5, at an absolute humidity of the vehicle interior 32 of 0 to 8 g/Kg, the effects of prevention of dispersal of allergens in the vehicle interior 32, prevention of dispersal of viruses in the vehicle interior 32, and prevention of dispersal of bacteria in the vehicle interior 32 are low, and conversely, at an absolute humidity of the vehicle interior 32 of 10 to 20 g/Kg, for example, the occupant P feels uncomfortable, and fogging of the window in the vehicle interior 32 occurs.

On the other hand, in order to prevent dispersal of allergens in the vehicle interior 32, dispersal of viruses in the vehicle interior 32, and dispersal of bacteria in the vehicle interior 32, it is optimal that the absolute humidity of the vehicle interior 32 is 8 to 10 g/Kg. Thus, in the present exemplary embodiment, a target Tb (target value) of the absolute humidity of the vehicle interior 32 for carrying out "prevention of dispersal of allergens in the vehicle interior", "prevention of dispersal of viruses in the vehicle interior", and "prevention of dispersal of bacteria in the vehicle interior" is set at an absolute humidity of 9 g/Kg, which is the center value of the absolute humidity of the vehicle interior 32 of 8 to 10 g/Kg.

It should be noted that the vehicle interior 32 is ordinarily maintained at a room temperature of about 25°C by an air conditioning device or the like. For this reason, in the present exemplary embodiment, the targets Ta, Tb and Tc are set as an absolute humidity, and not as a relative humidity, of the vehicle interior 32.

Further, in order to maintain the absolute humidity of the vehicle interior 32 at the above-described targets Ta, Tb and Tc (target values), as shown in Fig. 3, humidification patterns Pa, Pb and Pc for prescribing the humidification amount per one jetting of the humidifier 12 and the interval of intermittent jetting of the moisture St for each of the respective targets Ta, Tb and Tc are predetermined and stored at the control unit 18.

That is to say, the humidification pattern Pa is set to correspond to the above-described target Ta (absolute humidity of 11 g/Kg), and among the three humidification patterns, the humidification amount per one jetting of the humidifier 12 is set to be the largest; and the interval of intermittent jetting of the moisture St of the humidifier 12 is set to be the shortest. In other words, the higher the humidity of vehicle interior 32 that is designated as the target is, the faster the humidity decreases, and therefore, the humidification amount is made to be large, and the jetting interval is made to be short.

Further, the humidification pattern Pb is set to correspond to the above-described target Tb (absolute humidity of 9 g/Kg), and among the three humidification patterns, the humidification amount per one jetting of the humidifier 12 and the interval of intermittent jetting of the moisture St are set at medium levels.

Moreover, the humidification pattern Pc is set to correspond to the above-described target Tc (absolute humidity of 7 g/Kg), and among the three humidification patterns, the humidification amount per one jetting of the humidifier 12 is set to be the smallest, and the interval of intermittent jetting of the moisture St of the humidifier 12 is set to be the longest.

Further, as shown in the graphs in Figs. 4A and 4B, the relationships of a distance L between the humidifier 12 and the head of the occupant P in the vehicle interior (more precisely, a distance between the distance sensor 16 and the occupant P) with respect to a jetting speed V of the moisture St of the humidifier 12 and a humidification amount per one jetting Q, respectively, are each converted to data and stored in advance in the control unit 18.

That is to say, in the present exemplary embodiment, as shown in Fig. 4A, the jetting speed V of the moisture St of the humidifier 12 is set so as to become faster at a constant rate of increase as the distance L between the humidifier 12 and the head of the occupant P in the vehicle interior increases.

Further, as shown in Fig. 4B, the humidification amount per one jetting Q of the humidifier 12 is set so as to increase as the distance L between the humidifier 12 and the head of the occupant P in the vehicle interior increases. At this time, the rate of increase of the humidification amount per one jetting Q of the humidifier 12 is set so as to increase with a distance L1 between the humidifier 12 and the head of the occupant P in the vehicle interior as a boundary.

It should be noted that operation of the control unit 18 at which the respective information described above is converted to data and stored will be explained in detail below.

Next, operation of the humidity control device 10 according to one exemplary embodiment of the present invention will be explained.

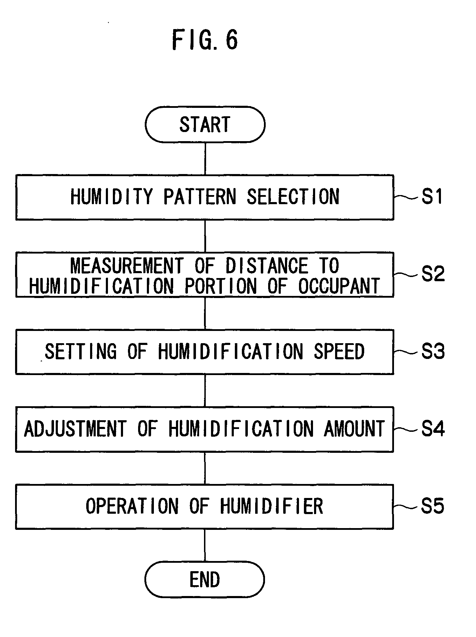

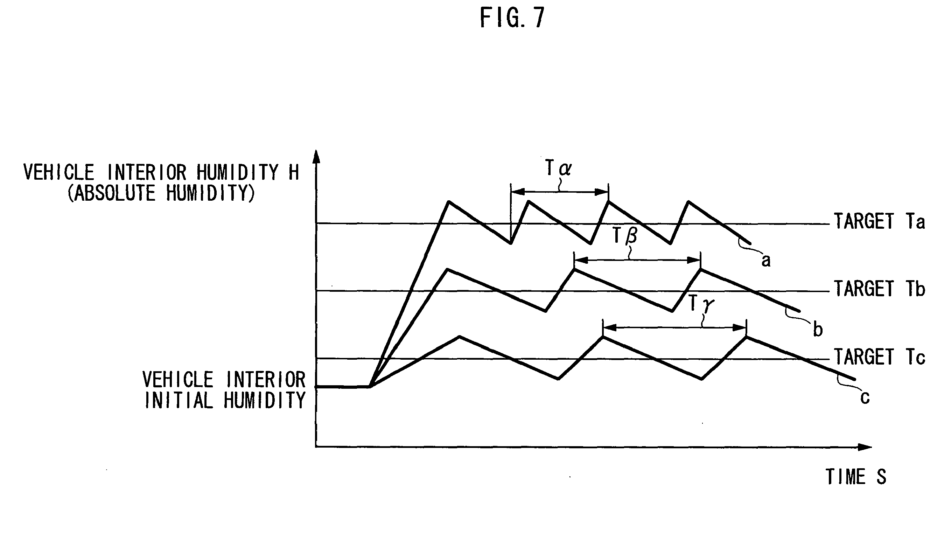

In Fig. 6, the flow of operation of the humidity control device 10 according to one exemplary embodiment of the present invention is shown, and in Fig. 7, the relationship between an absolute humidity H of the vehicle interior 32 humidified by the humidity control device 10 according to one exemplary embodiment of the present invention, and time S is shown.

First, when the occupant P operates any of the skin care mode switch 20, the eye dryness relief mode switch 22, the allergen suppression mode switch 24, and the ALL mode switch 26 provided at the operation panel 14 shown in Fig. 2, the operation signal corresponding to the operated switch is output to the control unit 18 shown in Fig. 1.

When the operation signal that has been output from the operation panel 14 as described above is input, the control unit 18 starts the program processing shown in the flowchart in Fig. 6. When the control unit 18 starts the program processing shown in the flowchart in Fig. 6, first, selection of the humidification pattern shown in Fig. 3 is carried out based on the operation signal that has been output from the operation panel 14 (step S1).

In other words, in the processing of step S1, in the case where the operation signal which has been output from the operation panel 14 in accordance with the skin care mode switch 20 being operated is input, the control unit 18 sets the absolute humidity of the vehicle interior 32 to the target Ta (absolute humidity of 11 g/Kg) and selects the humidification pattern Pa in order to prevent drying of the skin of the occupant P in the vehicle interior.

Similarly, in the processing of step S1, in the case where the operation signal which has been output from the operation panel 14 in accordance with the eye dryness relief mode switch 22 being operated is input, the control unit 18 sets the absolute humidity of the vehicle interior 32 to the target Tc (absolute humidity of 7 g/Kg) and selects the humidification pattern Pc in order to prevent drying of the eyes of the occupant P in the vehicle interior.

Further, in the processing of step S1, in the case where the operation signal which has been output from the operation panel 14 in accordance with the allergen suppression mode switch 24 being operated is input, the control unit 18 sets the absolute humidity of the vehicle interior 32 to the target Tb (absolute humidity of 9 g/Kg) and selects the humidification pattern Pb in order to prevent dispersal of allergens, viruses and bacteria in the vehicle interior 32.

It should be noted that, in the processing of step S1, in the case where the operation signal which has been output from the operation panel 14 in accordance with the ALL mode switch 26 being operated is input, the control unit 18 sets the absolute humidity of the vehicle interior 32 to the target Ta (absolute humidity of 11 g/Kg) and selects the humidification pattern Pa in order to realize a comfortable space in the vehicle interior 32.

Further, after selecting the humidification pattern corresponding to the switch of the operation panel 14 as described above, the control unit 18 detects the distance between the humidifier 12 and the head (humidification portion) of the occupant P in the vehicle interior (step S2). In other words, the control unit 18 outputs a control signal to the distance sensor 16 to cause the distance sensor to operate. When the control signal that has been output from the control unit 18 is input, the distance sensor 16 operates and outputs to the control unit 18 a measurement signal corresponding to the distance to the head of the occupant P. Then, the control unit 18 inputs the measurement signal that has been output from the distance sensor 16 and detects this measurement result as the distance between the humidifier 12 and the head of the occupant P in the vehicle interior.

Next, the control unit 18 sets the jetting speed (humidification speed) of the moisture St of the humidifier 12 (step S3). In other words, the control unit 18 calculates and sets (temporarily stores) the jetting speed of the moisture St of the humidifier 12 from the distance between the humidifier 12 and the head of the occupant P in the vehicle interior detected in the above-described step S2, based on the relationship between the distance L between the humidifier 12 and the head of the occupant P in the vehicle interior (more precisely, the distance between the distance sensor 16 and the occupant P) and the jetting speed V of the moisture St of the humidifier 12, which is shown in the graph in Fig. 4A.

At this time, as shown in the graph in Fig. 4A, the control unit 18 sets the above-described jetting speed of the moisture St of the humidifier 12 so that the jetting speed V of the moisture St of the humidifier 12 become faster at a constant rate of increase as the distance L between the humidifier 12 and the head of the occupant P in the vehicle interior increases.

Further, the control unit 18 carries out adjustment of the humidification amount per one jetting of the humidifier 12 that is prescribed by the humidification pattern selected in step S1 described above (step S4). That is to say, the control unit 18 carries out increasing and decreasing of the humidification amount per one jetting (standard value) of the humidifier 12 that is prescribed by the humidification pattern selected in step S1 described above, based on the relationship between the distance L between the humidifier 12 and the head of the occupant P in the vehicle interior (more precisely, the distance between the distance sensor 16 and the occupant P) and the humidification amount per one jetting Q of the humidifier 12, which is shown in the graph in Fig. 4B.

For example, in a case where the distance (actually measured value) between the humidifier 12 and the head of the occupant P in the vehicle interior that has been detected in step S2 described above is longer than the distance (standard value) between the humidifier 12 and the head of the occupant P in the vehicle interior that is prescribed as the standard value by the humidification pattern Pa, an amount of increase of the humidification amount corresponding to the amount of increase in the distance is calculated from the relationship shown in the graph in Fig. 4B, and this calculated amount of increase is added to the humidification amount (standard value) that is prescribed by the humidification pattern Pa selected in step S 1 described above.

It should be noted that, at this time, the control unit 18 sets the humidification amount per one jetting of the humidifier 12 described above so that the humidification amount per one jetting Q of the humidifier 12 increases as the distance L between the humidifier 12 and the head of the occupant P in the vehicle interior increases, as shown in the graph in Fig. 4B. Further, at this time, the humidification amount per one jetting of the humidifier 12 described above is set so that the rate of increase of the humidification amount per one jetting Q of the humidifier 12 increases with the distance L1 between the humidifier 12 and the head of the occupant P in the vehicle interior as a boundary.

On the other hand, for example, in a case where the distance (actually measured value) between the humidifier 12 and the head of the occupant P in the vehicle interior that has been detected in step S2 described above is shorter than the distance (standard value) between the humidifier 12 and the head of the occupant P in the vehicle interior that is prescribed as the standard value by the humidification pattern Pa, an amount of decrease of the humidification amount corresponding to the amount of decrease in the distance is calculated from the relationship shown in the graph in Fig. 4B, and this calculated amount of decrease is subtracted from the humidification amount (standard value) that is prescribed by the humidification pattern Pa selected in step S 1 described above.

After carrying out adjustment of the humidification amount per one jetting of the humidifier 12 as described above, the control unit 18 outputs the control signal to the humidifier 12 to cause the humidifier 12 to operate (step S5). When the control signal that has been output from the control unit 18 is input, the humidifier 12 operates based on this control signal and jets the moisture St from a nozzle which is not shown in the drawings.

Further, at this time, the control unit 18 controls operation of the humidifier 12, that is, the humidification amount per one jetting and the interval of intermittent jetting of the moisture St, based on the humidification pattern selected in step S1 described above. Moreover, at this time, the control unit 18 causes the moisture St to be jetted from the humidifier 12 at the jetting speed that has been set in step S3 and adjusts the humidification amount of the humidifier 12 based on the adjustment amount that has been set in step S4.

As a result, in the case where the skin care mode switch 20 of the operation panel 14 has been operated, the humidification amount per one jetting of the humidifier 12 is set so as to be large, and the interval of intermittent jetting of the moisture St of the humidifier 12 is set so as to be short, based on the humidification pattern Pa, so that the absolute humidity of the vehicle interior 32 is maintained at the target Ta of 11 g/Kg as shown in the line graph a in Fig. 7. It should be noted that, in the line graph a in Fig. 7, Tα (Tα < Tβ < Tγ) is made to be the interval of intermittent jetting of the moisture St.

At this time, as shown by the line graph a in Fig. 7, although the absolute humidity of the vehicle interior 32 increases and decreases with the target Ta as a center due to intermittent jetting of the moisture St from the humidifier 12, adjustment is carried out so that the upper and lower values of oscillation of the absolute humidity of the vehicle interior 32 at this time fall within the above-described optimal humidity range of 10 to 12 g/Kg for prevention of drying of the skin of the occupant P in the vehicle interior. As a result, drying of the skin of the occupant P in the vehicle interior is prevented while preventing the occupant P from feeling uncomfortable and fogging from occurring at the window in the vehicle interior 32.

Similarly, in the case where the eye dryness relief mode switch 22 of the operation panel 14 has been operated, the humidification amount per one jetting of the humidifier 12 is set so as to be small, and the interval of intermittent jetting of the moisture St of the humidifier 12 is set so as to be long, based on the humidification pattern Pc, so that the absolute humidity of the vehicle interior 32 is maintained at the target Tc of 7 g/Kg. It should be noted that, in the line graph c in Fig. 7, Tγ (Tα < Tβ < Tγ) is made to be the interval of intermittent jetting of the moisture St.

At this time, as shown by the line graph c in Fig. 7, although the absolute humidity of the vehicle interior 32 increases and decreases with the target Tc as a center due to intermittent jetting of the moisture St from the humidifier 12, adjustment is carried out so that the upper and lower values of oscillation of the absolute humidity of the vehicle interior 32 at this time fall within the above-described optimal humidity range of 6 to 8 g/Kg for prevention of drying of the eyes of the occupant P in the vehicle interior. As a result, drying of the eyes of the occupant P in the vehicle interior is prevented while preventing the occupant P from feeling uncomfortable and fogging from occurring at the window in the vehicle interior 32.

Further, in the case where the allergen suppression mode switch 24 of the operation panel 14 has been operated, the humidification amount per one jetting of the humidifier 12 and the interval of intermittent jetting of the moisture St of the humidifier 12 are set at medium levels, based on the humidification pattern Pb, so that the absolute humidity of the vehicle interior 32 is maintained at the target Tb of 9 g/Kg. It should be noted that, in the line graph b in Fig. 7, Tβ (Tα < Tβ < Tγ) is made to be the interval of intermittent jetting of the moisture St.

At this time, as shown by the line graph b in Fig. 7, although the absolute humidity of the vehicle interior 32 increases and decreases with the target Tb as a center due to intermittent jetting of the moisture St from the humidifier 12, adjustment is carried out so that the upper and lower values of oscillation of the absolute humidity of the vehicle interior 32 at this time fall within the above-described optimal humidity range of 8 to 10 g/Kg for prevention of dispersal of allergens in the vehicle interior 32, dispersal of viruses in the vehicle interior 32, and dispersal of bacteria in the vehicle interior 32. As a result, dispersal of allergens, viruses and bacteria in the vehicle interior 32 is prevented while preventing the occupant P from feeling uncomfortable and fogging from occurring at the window in the vehicle interior 32.

It should be noted that, in the case where the ALL mode switch 26 of the operation panel 14 has been operated, the humidification amount per one jetting of the humidifier 12 is set so as to be large, and the interval of intermittent jetting of the moisture St of the humidifier 12 is set so as to be short, based on the humidification pattern Pa, so that the absolute humidity of the vehicle interior 32 is maintained at the target Ta of 11 g/Kg. As a result, a comfortable space in the vehicle interior 32 is provided for the occupant P while preventing the occupant P from feeling uncomfortable and fogging from occurring at the window in the vehicle interior 32.

Further, in the present exemplary embodiment, the moisture St is jetted locally to the head, or more specifically, the entire face, of the occupant P in the vehicle interior from the nozzle of the humidifier 12, and the moisture St from the humidifier 12 is prevented from dispersing in the vehicle interior 32.

Moreover, in the present exemplary embodiment, as shown in Fig. 4A, the jetting speed V of the moisture St of the humidifier 12 becomes faster as the distance L between the humidifier 12 and the head of the occupant P in the vehicle interior increases, and the moisture St from the humidifier 12 is sent further to reliably reach the occupant P.

Further, in the present exemplary embodiment, as shown in Fig. 4B, the humidification amount per one jetting Q of the humidifier 12 is increased as the distance L between the humidifier 12 and the head of the occupant P in the vehicle interior increases, and the amount of the moisture St that reaches the occupant P from the humidifier 12 is maintained.

Then, after the elapse of a certain time period, or due to a stop switch, which is not shown in the drawings, being operated or the like, the control unit 18 causes the above described operation of the humidifier 12 to stop. The humidity control unit 10 according to the present exemplary embodiment operates as described above.

Next, the operation and effects of the humidity control device 10 according to one exemplary embodiment of the present invention will be explained.

As described in detail above, in the present exemplary embodiment, when the respective operation switches of the operation panel 14 are operated, the humidity of the vehicle interior 32 is maintained within an optimal range that feels comfortable for the occupant P in the vehicle interior, so as to achieve aimed items that are predetermined respectively corresponding to the respective operation switches (for example, for the skin care mode switch 20, "prevention of drying of the skin of the occupant in the vehicle interior" is determined as the aimed item). As a result, it is possible to further increase the comfort of the vehicle interior 32.

Moreover, in the present exemplary embodiment, the optimal humidity ranges are set to be different for each of the above-described aimed items, and the optimal humidity range is maintained for each of these aimed items. As a result, the respective aimed items (for example, "prevention of drying of the skin of the occupant in the vehicle interior") can be reliably achieved, and it is possible to further increase the comfort of the vehicle interior 32.

Further, in the present exemplary embodiment, the moisture St is locally jetted to the head (more specifically, the entire face) of the occupant P in the vehicle interior from the humidifier 12. Accordingly, the moisture St from the humidifier 12 is prevented from dispersing in the vehicle interior 32, and as a result, it is possible to prevent fogging of the window provided in the vehicle interior 32.

Moreover, in the present exemplary embodiment, as described above, the humidification amount per one jetting of the humidifier 12 and the interval (humidification interval) of intermittent jetting of the moisture St are adjusted to a level at which fogging of the window in the vehicle interior 32 does not occur, and the humidity of the vehicle interior 32 is maintained within the optimal range. As a result, it is possible to reliably prevent fogging of the window provided in the vehicle interior 32.

Furthermore, in the present exemplary embodiment, as shown in Fig. 4A, the jetting speed (humidification speed) of the moisture St of the humidifier 12 is adjusted so that the jetting speed V of the moisture St of the humidifier 12 becomes faster as the distance L between the humidifier 12 and the head of the occupant P in the vehicle interior increases. As a result, for example, even if the distance between the humidifier 12 and the occupant P in the vehicle interior increases due to the body type, seating position or the like of the occupant P, it is possible to send the moisture St from the humidifier 12 even further and cause it to reliably reach the occupant P. Moreover, dispersal of the moisture St from the humidifier 12 can be suppressed, and it becomes possible to more reliably prevent fogging of the window in the vehicle interior 32.

Further, in the present exemplary embodiment, as shown in Fig. 4B, the humidification amount per one jetting of the humidifier 12 is adjusted so that the humidification amount per one jetting Q of the humidifier 12 is increased as the distance L between the humidifier 12 and the head of the occupant P in the vehicle interior increases. As a result, for example, even if the distance between the humidifier 12 and the occupant P in the vehicle interior increases due to the body type, seating position or the like of the occupant P, it is possible to maintain the amount of the moisture St that reaches the occupant P from the humidifier 12. As a result, it becomes possible to reliably supply the moisture St to the occupant P.

Next, modified examples of the humidity control device according to one exemplary embodiment of the present invention will be explained.

In the above exemplary embodiment, although the targets Ta, Tb and Tc are set as an absolute humidity, rather than as a relative humidity, of the vehicle interior 32, the targets Ta, Tb and Tc may, of course, be set as a relative humidity, rather than as an absolute humidity, of the vehicle interior 32.

Further, in the above exemplary embodiment, although the humidification amount per one jetting of the humidifier 12 and the interval (humidification interval) of intermittent jetting of the moisture St are adjusted so that the absolute humidity of the vehicle interior 32 is maintained at the predetermined target (target value), a configuration may be provided in which either one of the humidification amount per one jetting of the humidifier 12 or the interval (humidification interval) of intermittent jetting of the moisture St is adjusted.

### Industrial Applicability

By applying the present invention to a vehicle, humidity control is provided by which a vehicle interior can be humidified so as to achieve an optimal humidity matching with a plurality of aims of an occupant in the vehicle interior.

### Description of the Reference Numerals

- 10: Humidity Control Device
- 12: Humidifier (Humidification Unit)
- 14: Operation Panel
- 16: Distance Sensor
- 18: Control Unit (Control Means)
- 20: Skin Care Mode Switch (Operation Switch)
- 22: Eye Dryness Relief Mode Switch (Operation Switch)
- 24: Allergen Suppression Mode Switch (Operation Switch)
- 26: ALL Mode Switch (Operation Switch)
- 32: Vehicle Interior
- Ta, Tb, Tc: Target (Target Value)
- P: Occupant (Humidification Object)

## Claims

1. A humidity control device comprising:
a humidification unit that is capable of humidifying a vehicle interior; and
a control unit that controls operation of the humidification unit so that a humidity of the vehicle interior is maintained at a predetermined target value.

2. The humidity control device according to claim 1, wherein the humidification unit is configured to be capable of locally humidifying a specific region of an occupant in the vehicle interior.

3. The humidity control device according to claim 1 or claim 2, wherein the humidification unit is configured so that it is possible to adjust at least one of a humidification amount and a humidification interval in the vehicle interior, and the control unit adjusts at least one of the humidification amount and the humidification interval of the humidification unit so that the humidity of the vehicle interior is maintained at the predetermined target value.

4. The humidity control device according to any one of claim 1 to claim 3, wherein the humidification unit is configured so that it is possible to adjust a humidification speed with respect to a humidification object, and the control unit adjusts the humidification speed of the humidification unit in accordance with a distance between the humidification unit and the humidification object.

5. The humidity control device according to any one of claim 1 to claim 4, wherein the humidification unit is configured so that it is possible to adjust a humidification amount with respect to a humidification object, and the control unit adjusts the humidification amount of the humidification unit in accordance with a distance between the humidification unit and the humidification object.

6. The humidity control device according to any one of claim 1 to claim 5, wherein the control unit stores a plurality of the target values, the plurality of the target values can be selected, and when any of the plurality of the target values is selected, the control unit controls operation of the humidification unit so that the humidity of the vehicle interior is maintained at the one selected from the plurality of the target values.

7. The humidity control device according to claim 6, further comprising an operation switch that is capable of selecting each of the plurality of the target values, wherein the control unit controls operation of the humidification unit so that the humidity of the vehicle interior is maintained at the target value corresponding to the selection state of the operation switch.

8. The humidity control device according to claim 4, wherein the humidification speed is adjusted so as to increase according to an increase in the distance.

9. The humidity control device according to claim 5, wherein the humidification amount is adjusted so as to increase according to an increase in the distance, and a rate of increase of the humidification amount with respect to the distance is different for different ranges of the distance.

10. A humidity control method for a humidification unit that is disposed at a vehicle interior, the method comprising:
determining a target humidity of the vehicle interior according to a humidification pattern that is selected in accordance with a humidification aim;
measuring a distance between the humidification unit and an occupant in the vehicle interior;
calculating a humidification speed of the humidification unit based on the target humidity and the distance;
adjusting a humidification amount per one jetting that is prescribed by the humidification pattern, based on the distance; and
operating the humidification unit based on the adjustment result of the humidification amount per one jetting and the humidification speed.
